Europäisches Patentamt

European Patent Office

Office européen des brevets

(19)

(11) Veröffentlichungsnummer: **0 134 820**
**B1**

(12) # EUROPÄISCHE PATENTSCHRIFT

(45) Veröffentlichungstag der Patentschrift:
02.09.87

(21) Anmeldenummer: 83106423.3

(22) Anmeldetag: 01.07.83

(51) Int. Cl.⁴: **B 29 C 37/00,** B 29 C 43/00,
B 32 B 31/10

(54) Verfahren zum Herstellen von Kunststoffkarten.

(43) Veröffentlichungstag der Anmeldung:
27.03.85 Patentblatt 85/13

(45) Bekanntmachung des Hinweises auf die Patenterteilung:
02.09.87 Patentblatt 87/36

(84) Benannte Vertragsstaaten:
AT BE CH DE FR GB IT LI NL SE

(56) Entgegenhaltungen:
EP-A-0 045 003
CH-A-376 652
FR-A-1 037 593
FR-A-2 467 089
GB-A-745 628
US-A-3 620 880

(73) Patentinhaber: **Melzer, Roland, Glatzer Weg 9,
D-5830 Schwelm (DE)**
Patentinhaber: **Melzer, Rainer, Kaiserstrasse 24,
D-5830 Schwelm (DE)**

(72) Erfinder: **Melzer, Roland, Glatzer Weg 9, D-5830
Schwelm (DE)**
Erfinder: **Melzer, Rainer, Kaiserstrasse 24, D-5830
Schwelm (DE)**

(74) Vertreter: **Dipl.- Ing. H. Marsch Dipl.- Ing. K.
Sparing Dipl.- Phys.Dr. W.H. Röhl
Patentanwälte, Rethelstrasse 123, D-4000
Düsseldorf (DE)**

EP 0 134 820 B1

## Beschreibung

Die Erfindung betrifft ein Verfahren und eine Anlage zum Herstellen von Kunststoffkarten. Ein Verfahren mit den im Oberbegriff des Patentanspruchs 1 genannten Merkmalen und eine Vorrichtung mit den im Oberbegriff des Anspruchs 4 genannten Merkmalen sind in EP-A-45003 offenbart. Bei dieser bekannten Anlage werden die einlaufseitigen Trommeln beheizt, und die in Form eines Bandes zugeführten Kunststoffblätter werden dadurch erhitzt, daß sie auf einem einstellbaren Umschlingungswinkel an dem über die beheizte Trommel laufenden Band in Anlage gehalten werden. Die Abkühlung erfolgt in einer bürstengekühlten Druckzone.

Beim Einlauf des erwärmten, plastifizierten Schichtaufbaus in den Einlaufspalt ("Nip") zwischen den einlaufseitigen Trommeln wird das Material entgegen der Förderrichtung und seitlich unkontrollierbar verdrängt.

Bei den Kunststoffkarten, mit deren Herstellung sich die Erfindung befaßt, handelt es sich um Scheckkarten, Kreditkarten, Ausweiskarten und dergleichen.

Die hier in Rede stehenden Kunststoffkarten bestehen aus einer bedruckten Einlage, bei der es sich um ein beidseitig bedrucktes Blatt oder aber auch um zwei Rücken an Rücken liegende, einseitig bedruckte Blätter handeln kann, wobei die Gesamtdicke etwa 0,5 mm beträgt, und zwei Klarsicht-Deckblättern von je etwa 0,1 mm Stärke, die auf die Druckbilder aufgebracht sind. Die Forderungen an die Maßhaltigkeit solcher Karten, insbesondere bezüglich der Registerhaltigkeit und der Rauhtiefe der Außenflächen, sind extrem hoch. Die Fertigung wird noch zusätzlich dann erschwert, wenn ein Streifen aus magnetisierbarem Material zusätzlich und bündig mit der Oberfläche der einen oder beider Klarsicht-Deckblätter einzulegen ist.

Bisher erfolgt die Fertigung so, daß man relativ große Druckbogen der Einlagen mit entsprechend großen Bögen aus Klarsichtfolie möglichst registerhaltig schichtet, eine größere Anzahl solcher Schichtaufbauten, z. B. zehn oder mehr, übereinanderstapelt, dann mehrere solcher Stapel unter Zwischenlage von Heizplatten unter einer Presse aufschichtet, Druck ausübt und erwärmt. Die Schichtaufbauten, in der Regel aus Polyvinylchlorid, verbacken dabei zu entsprechend großen Platten, welche dann in einzelne Karten zerschnitten werden. Der eigentliche Verbackprozeß läuft dabei innerhalb von etwa dreißig Minuten ab, wobei die Aufheizung ziemlich langsam vor sich geht. Die in der beschriebenen Weise gefertigten Karten entsprechen bei sorgfältiger Arbeit den oben erwähnten strengen Anforderungen. Der beschriebene Verfahrensablauf ist jedoch hinsichtlich anderer Punkte verbesserungsbedürftig.

Der diskontinuierliche Ablauf erschwert die Organisation, und die Ausschußrate kann hoch sein. Es werden zahlreiche Arbeitskräfte benötigt, was bei häufig sicherheitsempfindlichen Erzeugnissen - Kreditkarten, Scheckkarten, usw. - besonders unerwünscht ist. Wenn schließlich die Karten noch eine individualisierende Kennzeichnung tragen, etwa eine Seriennummer, müssen sie nach dem Zerschneiden sortiert werden.

Aufgabe der Erfindung ist es, das Verfahren und die Vorrichtung mit den eingangs genannten Merkmalen derart auszugestalten, daß die hohen Anforderungen an die Qualität der gefertigten Karten, die vorstehend erläutert wurden, erfüllt werden können.

Die gemäß der Erfindung hierfür vorgesehenen Maßnahmen ergeben sich aus den Ansprüchen 1 bzw. 4.

Durch diese Maßnahmen wird erreicht, daß beide Bänder und der Schichtaufbau mit höchster Präzision synchron laufen, wobei die seitlichen unbeheizten Niederhalter eine Barriere aus nicht-plastifiziertem Material abstützen, die das seitliche Wegfließen des erhitzten Materials unterbindet.

Die Unteransprüche definieren zweckmäßige und bevorzugte Weiterbildungen des Konzepts gemäß der Erfindung.

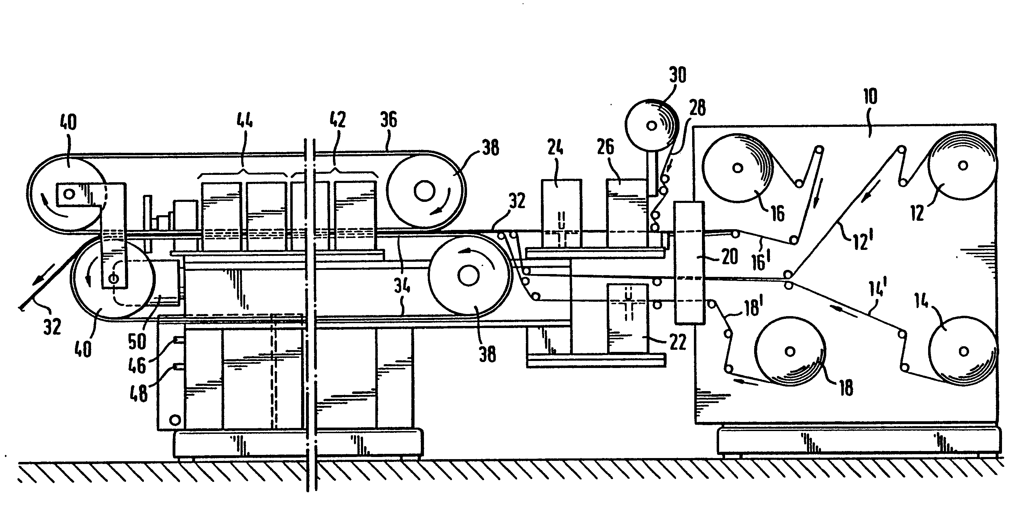

Ein Ausführungsbeispiel einer Vorrichtung zum Durchführen des Verfahrens gemäß der Erfindung ist in der beigefügten Zeichnung dargestellt. Sie zeigt, weitgehend schematisiert, die ersten Maschinengruppen einer kompletten Anlage in Seitenansicht.

In einem Gestell 10 sind Vorratsbobinen der zu verarbeitenden Streifen gelagert. Die Bobinen 12 und 14 liefern jeweils einen oben bzw. unten bedruckten Einlagestreifen 12' bzw. 14'. Von den Bobinen 16 und 18 läuft je ein Streifen Klarsichtfolie 16' bzw. 18' ab. Falls es erforderlich ist, daß die Druckbilder der beiden Streifen 12' und 14' registerhaltig übereinander liegen, können die hierfür üblichen und deshalb nicht dargestellten Regeleinrichtungen verwendet werden.

Alle vier Streifen 12' - 18' durchlaufen zunächst eine Ionisierkammer 20, um die Streifen von etwaigen statischen Aufladungen freizumachen.

Es sei angenommen, daß die Einlagestreifen bereits im Zusammenhang mit dem Druckvorgang registerhaltig gelocht worden sind; im Ausführungsbeispiel liegen auf den Streifen zwei Druckbilder nebeneinander, und in dem dazwischenliegenden mittleren Bereich befinden sich die Lochungen. Die entsprechenden Stanzstationen könnten aber auch in der vorliegenden Anlage hinter den Vorratsbobinen angeordnet sein. Diese Lochungen werden abgetastet, und der Klarsichtfolienstreifen 18' gelangt durch eine entsprechend gesteuerte Stanzstation 22, in der er registerhaltig gelocht wird.

Eine entsprechende Stanzstation 24 ist auch für den oberen Klarsichtfolienstreifen 16' vorgesehen; hier ist jedoch noch eine Siegelungsstation 26 vorgeschaltet, in der auf die Außenseite des Streifens 16' eine Magnetspur aufgesiegelt wird; sie wird von einem Trägerband 28 abgelöst, das auf einer Bobine 30 bevorratet ist. Die Rückspulung des leeren Trägerbandes ist der Einfachheit halber nicht dargestellt.

Über Führungsrollen, die in der Zeichnung zwar angedeutet sind, aber die nicht im einzelnen erläutert zu werden brauchen, werden nun die vier Streifen 12', 14', 16' nebst Magnetspur und 18' zusammengeführt und bilden nun den Schichtaufbau 32, der in den Nip zwischen den metallischen Bändern 34 und 36 einläuft.

Die Bänder sind in sich geschlossen und über Einlauftrommeln 38 und Auslauftrommeln 40 gelegt. Eines der Bänder, z. B. das untere Band 34, ist mit Stiften entsprechend den Registerlöchern in den Klarsichtfolienstreifen 16' und 18' bestückt, und das andere Band - hier also das obere Band 36 - weist ebenfalls mit den Registerlöchern fluchtende Löcher auf. Nur eines der Bänder wird zum schrittweisen Umlauf angetrieben und nimmt dabei über die ineinandergreifenden Stifte und Löcher den Schichtaufbau 32 und das andere Band mit.

Der so gebildete "Gurt" läuft nun zwischen den oberen und den unteren Stempeln einer Anzahl von Pressen durch, von denen in der gezeichneten Anlage zehn vorhanden sind und von denen die in Förderrichtung ersten acht, mit 42 bezeichnet, elektrisch beheizt sind, während die letzten beiden, mit 44 bezeichnet, wassergekühlt sind; die Kühlwasserzu- und abfuhr erfolgt über die Anschlüsse 46, 48.

Die einzelnen Pressen sind hinsichtlich ihrer Temperatur und des von ihnen ausgeübten Druckes individuell einstellbar, wobei der Aufheiz- und Abkühlvorgang erheblich schneller erfolgen als bei dem eingangs geschilderten herkömmlichen Verfahren, damit der Durchsatz der Anlage wirtschaftliche Höhe erreicht.

Es versteht sich, daß die Pressen während des schrittweisen Vorschubs des "Gurtes" öffnen. Jede beheizte Presse weist neben ihrem beheizten Oberstempel - gegebenenfalls ist auch der Unterstempel beheizt - noch seitliche unbeheizte Niederhalter auf, die die Ränder des Gurtes plan halten. Dies hat den Vorteil, daß der eigentliche Nutzbereich des Schichtaufbaus 32 seitlich von kalt bleibendem Material abgestützt wird und nicht wegfließen kann.

Am Auslaufende der insoweit beschriebenen Baugruppe ist noch der Hauptantriebsmotor 50 angedeutet, der den Vorschub bewirkt und auch die Stanzstempel antreibt; auch die Pressenhübe können von ihm abgeleitet sein.

Wie oben erwähnt, verkleben die Bänder 34 und 36 mit dem Schichtaufbau, wenn beheizt wird, doch löst sich die Verklebung wieder beim Durchlauf der Kühlpressen 44, und der nun verbackene Schichtaufbau 32 läuft aus dem Auslaufnip zwischen den Bändern freitragend heraus.

An die insoweit beschriebene Baugruppe schließt sich eine weitere Baugruppe an. Der verbackene und abgekühlte Schichtaufbau ist stabil genug, um auf Zug beansprucht zu werden; hierfür ist eine Vorschubeinheit vorgesehen, die beispielsweise mit Stachelscheiben in die noch immer vorhandenen Registerlochungen eingreift. Der Vorschubeinheit ist noch eine Station vorgeschaltet, in der von einem Prägewerk bearbeitete Prägestreifen aufgebracht werden können. Hinter der Vorschubeinheit befindet sich die Stanzstation, in der die Karten einzeln aus dem Schichtaufbau 32 ausgestanzt werden, und in einer folgenden Abgitterstation werden die Karten von dem Abfall-Stanzgitter getrennt, während die fertigen Karten beispielsweise mittels eines Gurtförderers gesammelt werden.

Es ist nicht zwingend, daß vier Streifen miteinander verbacken werden; im Extremfall liegen zwei Rücken an Rücken liegende Streifen ohne Deckfolie vor, oder ein beidseitig bedruckter Mittelstreifen mit oberer und unterer Decklage. Es ist ferner nicht zwingend, daß die zu verbackenden Folien alle von der Rolle verarbeitet werden. Wenn beispielsweise ein Datenspeicherorgan oder ein integrierter Schaltkreis einzulegen ist, kann es zweckmäßig sein, nur einen Trägerstreifen ab Rolle zuzuführen und die Einlagen und weiteren Folien von Hand oder automatisch aufzulegen.

## Patentansprüche

1. Verfahren zum Herstellen von Kunststoffkarten durch Verbacken eines Schichtaufbaus (32) aus mindestens zwei Kunststoffblättern (12', 14',16', 18') unter Druck zwischen einem oberen und einem unteren wärmeleitenden Band (34, 36), bei welchem Verfahren die Kunststoffblätter erhitzt werden, der Schichtaufbau zwischen den Bändern liegend unter Druck gesetzt wird und zusammen mit den Bändern zu einer Abkühlzone gefördert wird, dadurch gekennzeichnet, daß zunächst der Schichtaufbau (32) gebildet wird, dieser taktweise, in Transportrichtung formschlüssig mit den Bändern (34, 36) gekoppelt in eine Zone gefördert wird, in der beheizte Preßorgane (42) nur auf Bereiche innerhalb unbeheizter seitlicher Niederhalter für die Ränder des Schichtaufbaus (32) auf diesen einwirken, und danach in eine Zone gefördert wird, in der der Schichtaufbau unter Druck durch gekühlte Preßorgane (44) abgekühlt wird.

2. Verfahren nach Anspruch 1, dadurch gekennzeichnet, daß die Kunststoffblätter jeweils als Streifen (12', 14', 16', 18') von einer Vorratsbobine (12, 14, 16, 18) abgespult werden.

3. Verfahren nach Anspruch 2, dadurch gekennzeichnet, daß die Kunststoffblätterstreifen (16', 18') mit einer Serie von Registerlochungen versehen werden, denen komplementäre Mitnehmer der Bänder (34, 36) zugeordnet sind.

4. Vorrichtung zum Durchführen des Verfahrens nach Anspruch 1, 2 oder 3, umfassend

5  0 134 820  6

- über Trommeln geführte, in sich geschlossene metallische Bänder,
- eine Antriebseinheit für den Umlauf der Bänder, und
- in Umlaufrichtung der einander zugekehrten Bändertrums aufeinanderfolgend angeordnete Heiz- und Kühleinrichtungen,

dadurch gekennzechnet, daß die Bänder (34, 36) von der Antriebseinheit (50) intermittierend angetrieben und mit dem Schichtaufbau formschlüssig Koppelbar sind und daß die Heiz- und Kühleinrichtungen Preßorgane (42, 44) sind, von denen die beheizten Preßorgane seitlich auf den Rand des Schichtaufbaus (32) wirkende Niederhalter aufweisen.

5. Vorrichtung nach Anspruch 4, dadurch gekennzeichnet, daß eine Mehrzahl von beheizten Preßorganen (42) vorgesehen ist, deren Temperatur und Druck einzeln einstellbar sind.

6. Vorrichtung nach Anspruch 4 oder 5, dadurch gekennzeichnet, daß eine Mehrzahl von gekühlten Preßorganen vorgesehen ist, deren Temperatur und Druck einzeln einstellbar sind.

7. Vorrichtung nach Anspruch 4, dadurch gekennzeichnet, daß die Antriebseinheit (50) nur eines der Bänder (34) antreibt, das über Stifte, die in Löcher des anderen Bandes (36) greifen, dieses mitnimmt.

8. Vorrichtung nach Anspruch 7, dadurch gekennzeichnet, daß den Bändern (34, 36) eine Stanzstation (22, 24) zum Lochen der den Schichtaufbau (32) bildenden Materialbahnen (12', 14', 16', 18') registerhaltig mit dem gelochten Band (36) vorgeschaltet ist.

9. Vorrichtung nach Anspruch 7, dadurch gekennzeichnet, daß die Trommeln (38, 40) seitliche Stacheln aufweisen, die in entsprechende Führungslöcher der Bänder (34, 36) nahe deren Rändern greifen.

**Claims**

1. Process for the manufacture of plastics cards by baking a layer structure (32) of at least two plastics sheets (12', 14', 16', 18') under pressure between an upper and a lower heat-conductive belt (34, 36), in which process the plastics sheets are heated, the layer structure lying between the belts is placed under pressure and, together with the belts, is conveyed into a cooling zone, characterised in that first of all the layer structure (32) is formed, this is conveyed stepwise, in the transport direction coupled to the belts (34, 36) in positively locking manner, into a zone in which the heated pressing elements (42) act on the layer structure (32) only in regions within unheated lateral holding-down members for the edges of the layer structure (32), and is then conveyed into a zone in which the layer structure is cooled under pressure by cooled pressing elements (44).

2. Process according to claim 1, characterised in that the plastics sheets are each unwound in the form of a strip (12', 14', 16', 18') from a supply bobbin (12, 14, 16, 18).

3. Process according to claim 2, characterised in that the plastics sheet strips (16', 18') are provided with a series of register holes which are assigned complementary dogs on the belts (34, 36).

4. Device for carrying out the process according to claim 1, 2 or 3, comprising
- closed metal belts guided over cylinders,
- a drive unit for rotating the belts, and
- heating and cooling devices arranged in succession in the direction of rotation of the belt portions that face one another,

characterised in that the belts (34, 36) are driven intermittently by the drive unit (50) and can be coupled to the layer structure in positively locking manner, and that the heating and cooling elements are pressing elements (42, 44) of which the heated pressing elements have holding-down members that act laterally on the edge of the layer structure (32).

5. Device according to claim 4, characterised in that there is provided a plurality of heated pressing elements (42) of which the temperature and pressure can be regulated individually.

6. Device according to claim 4 or 5, characterised in that there is provided a plurality of cooled pressing elements of which the temperature and pressure can be regulated individually.

7. Device according to claim 4, characterised in that the drive unit (50) drives only one of the belts (34), which belt drives the other belt (36) by means of pins that engage in holes in this other belt.

8. Device according to claim 7, characterised in that upstream of the belts (34, 36) there is arranged a punching station (22, 24) for perforating webs of material (12', 14', 16', 18') forming the layer structure (32) in register with the perforated belt (36).

9. Device according to claim 7, characterised in that the cylinders (38, 40) have lateral spikes which engage in corresponding guide holes in the belts (34, 36) close to the edges thereof.

**Revendications**

1. Procéde pour fabriquer des cartes en matière plastique en solidarisant par chauffage une structure stratifiée (32) formée d'au moins deux feuilles en matière plastique (12', 14', 16', 18'), sous pression entre des bandes thermo-conductrices supérieure et inférieure (34, 36), et selon lequel on chauffe les bandes en matière plastique, on applique une pression à la structure stratifiée placée entre les bandes et on l'entraîne simultanément avec les bandes en direction d'une zone de refroidissement, caractérisé en ce qu'on forme tout d'abord la structure stratifiée (32), qu'on amène cette dernière de façon cadencée, dans l'état où elle est accouplée selon

4

une liaison par formes complémentaires avec les bandes (34, 36) dans la direction de transport, dans une zone dans laquelle des organes de pressage chauffés (42) agissent sur les bords de la structure stratifiée (32), uniquement dans des zones situées à l'intérieur de serre-flans latéraux non chauffés, et que cette dernière est ensuite entraînée jusque dans une zone dans laquelle la structure stratifiée est refroidie sous pression au moyen d'organes de pressage refroidis (44).

2. Procédé selon la revendication 1, caractérisé en ce que des feuilles de matière plastique sont dévidées respectivement sous la forme de bandes (12', 14', 16', 18') d'une bobine débitrice (12, 14, 16, 18).

3. Procédé selon la revendication 2, caractérisé en ce que les bandes de feuilles en matière plastique (16', 18') sont munies d'une série de trous d'alignement, auxquels sont associés des organes d'entraînement complémentaires de bandes (34, 36).

4. Dispositif pour la mise en oeuvre du procédé selon l'une quelconque des revendications 1, 2 ou 3, comprenant
   - des bandes métalliques fermées sur elles-mêmes et guidées sur des tambours,
   - une unité d'entraînement pour la circulation des bandes, et
   - des dispositifs de chauffage ou de refroidissement disposés successivement dans la direction de circulation des brins, tournés l'un vers l'autre, des bandes,
   caractérisé en ce que les bandes (34, 36) sont entraînées de façon intermittente par l'unité d'entraînement (50) et peuvent être accouplées selon une liaison par formes complémentaires à la structure stratifiée, et que les dispositifs de chauffage et de refroidissement sont des organes de pressage (42, 44), parmi lesquels des organes de pressage chauffés possèdent des serre-flans agissant latéralement sur le bord de la structure stratifiée (32).

5. Dispositif selon la revendication 4, caractérisé en ce qu'il est prévu une multiplicité d'organes de pressage chauffés (42), dont la température et la pression sont réglables individuellement.

6. Dispositif selon la revendication 4 ou 5, caractérisé en ce qu'il est prévu une multiplicité d'organes de pressage refroidis, dont la température et la pression sont réglables individuellement.

7. Dispositif selon la revendication 4, caractérisé en ce que l'unité d'entraînement (50) atteint uniquement l'une des bandes (34) qui, au moyen d'ergots s'engageant dans les trous de l'autre bande (36), entraîne simultanément cette dernière.

8. Dispositif selon la revendication 7, caractérisé en ce qu'un poste de découpage (22, 24) servant à perforer les bandes de matériau (12',14',16',18') constituant la structure stratifiée (32) d'une manière alignée avec la bande perforée (36), est disposé en amont des bandes (34, 36).

9. Dispositif selon la revendication 7, caractérisé en ce que les tambours (38, 40) comportent des picots latéraux, qui s'engagent dans des trous correspondants de guidage des bandes (34, 36), à proximité des bords de ces dernières.

0 134 820